# EUROPÄISCHE PATENTANMELDUNG

(11) **EP 1 160 751 A1**
(43) Veröffentlichungstag der Anmeldung: **05.12.2001**
(21) Anmeldenummer: 01110758.8
(22) Anmeldetag: 03.05.2001
(51) Int. Cl.: G08B 29/18

(54) **Bewegungsmelder**

(30) Priorität: 19.05.2000 DE 10024778
(71) Anmelder: ABB PATENT GmbH, 68526 Ladenburg (DE)
(72) Erfinder: Zapp, Robert, 58579 Schalksmühle (DE); Rosch, Rainer, Dr., 58513 Lüdenscheid (DE)
(74) Vertreter: Miller, Toivo

(57) **Zusammenfassung**

Die Erfindung bezieht sich auf einen Bewegungsmelder (3) mit einem ersten Sensorsystem (10), das wenigstens einen Infrarot-Sensor enthält und für die Erfassung sich bewegender Personen in einem großen ersten Erfassungsbereich (1) ausgelegt ist, und außerdem mit wenigstens einem Sensorsystem einer zweiten Art (11), das für eine Erfassung einer Personenbewegung in einem innerhalb des ersten Erfassungsbereichs (1) liegenden kleineren zweiten Erfassungsbereich (2) ausgelegt ist. Eine elektronische Steuereinrichtung (13, 14, 18) des Bewegungsmelders (3) ist dafür eingerichtet, das wenigstens eine Sensorsystem der zweiten Art (11) nur dann für eine vorgegebene Dauer oder eine bestimmte Aktion zu aktivieren, wenn vom ersten Sensorsystem (10) eine Personenbewegung detektiert wurde.

## Beschreibung

Die Erfindung bezieht sich auf einen Bewegungsmelder, der ein Sensorsystem mit wenigstens einem Infrarot-Sensor enthält.

Solche Bewegungsmelder sind als Passiv-Infrarot-Bewegungsmelder bekannt und beispielsweise in dem Fachbuch "Passiv-Infrarot-Bewegungsmelder", Die Bibliothek der Technik 131, verlag moderne industrie, Landsberg/Lech beschrieben.

Bewegungsmelder üblicher Bauart sind so ausgelegt, daß sie in einem möglichst großen Erfassungsbereich sich bewegende Personen erfassen. Diese Erfassung wird normalerweise dazu genutzt, Licht einzuschalten. Um einen Erfassungsbereich von typisch mindestens 16 m x 16 m realisieren zu können, müssen solche Bewegungsmelder in der optischen und elektronischen Auslegung höchstempfindlich sein. Durch diese erforderliche Höchstempfindlichkeit kann allerdings nicht sichergestellt werden, daß keine Fehlschaltungen, z. B. durch die Bewegung von Bäumen hervorgerufen werden. Schaltet ein Bewegungsmelder nur Licht, so sind Fehlschaltungen tolerierbar, weil das Licht nach eingestellter kurzer Zeit wieder verlischt. Wegen der bestehenden Fehlschaltungsmöglichkeit scheidet ein Einsatz bekannter hochempfindlicher Bewegungsmelder für eine Verwendung in Einbruchmeldesystemen aus, da die Wahrscheinlichkeit eines Fehlalarms unkalkulierbar hoch wäre.

Der Erfindung liegt daher die Aufgabe zugrunde, einen Bewegungsmelder anzugeben, der zusätzlich auch für den Einsatz in Sicherheitssystemen geeignet ist.

Diese Aufgabe wird durch einen Bewegungsmelder gelöst, der die im Anspruch 1 angegebenen Merkmale aufweist. Vorteilhafte Ausgestaltungen sind in weiteren Ansprüchen angegeben.

Es wird demnach vorgeschlagen, zwei Erfassungsbereiche vorzusehen, wobei in einem ersten Bereich durch einen hochempfindlichen pyroelektrischen Sensor Bewegungen erfaßt werden, und in einem zweiten, engeren Bereich Bewegungen von einem weiteren Sensor, beispielsweise einem aktiven Radar-Sensor erfaßt werden. Geeignete Radar-Sensoren sind beispielsweise aus Anwendungen bei automatischen Türöffnern bekannt.

Die im Vergleich zu pyroelektrischen Meldern sehr geringen Reichweiten und Erfassungswinkel eines Radar-Sensors gelten an sich im Hinblick auf eine Anwendung als Bewegungsmelder als nachteilig. Zum andern sind aktive Melder, die kontinuierlich ein HF-Feld aussenden wegen des Elektrosmog-Problems nicht beliebt, und werden von breiten Bevölkerungsschichten aus diesem Grund abgelehnt.

Bei der erfindungsgemäßen Anordnung wird bei Detektion einer Person im ersten, großen Erfassungsbereich das Licht eingeschaltet, und gleichzeitig, also nur dann, der zweite Sensor mit seinem engeren Erfassungsbereich aktiviert. Bedenken bezüglich Elektrosmog bestehen daher nicht. Der geringe Erfassungsbereich eines Radar-Sensors wird bei der Erfindung als Vorteil genutzt.

Eine weitere Beschreibung der Erfindung erfolgt nachstehend anhand eines in der Zeichnung dargestellten Ausführungsbeispiels.

Es zeigt:
- Fig. 1: eine schematisierte Darstellung der Erfassungsbereiche des erfindungsgemäßen Bewegungsmelders, und
- Fig. 2: ein Blockschema mit Funktionseinheiten des erfindungsgemäßen Bewegungsmelders.

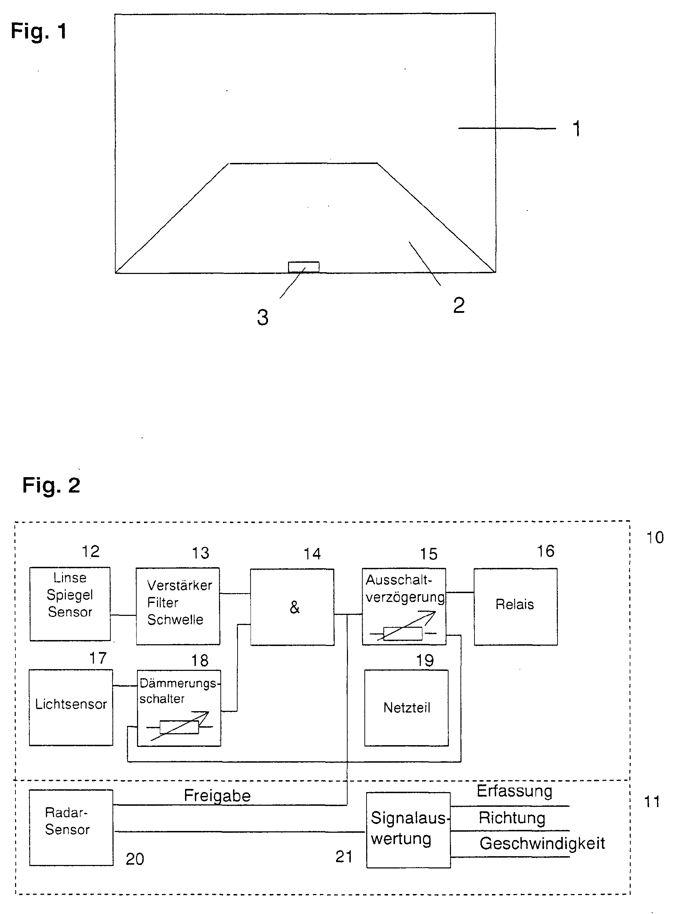

Fig. 1 zeigt schematisch einen ersten, großen Erfassungsbereich 1 eines Bewegungsmelders 3, der durch ein erstes Sensorsystem 10 (s. Fig.2) des Bewegungsmelders 3 erreicht ist. Das erste Sensorsystem 10 enthält in üblicher Weise wenigstens einen IR-Sensor. Innerhalb des ersten Erfassungsbereichs 1 liegt ein kleinerer Erfassungsbereich 2, der durch ein Sensorsystem einer zweiten Art 11 (s. Fig.2) gegeben ist. Nach dem selben Prinzip könnte auch durch ein weiteres Sensorsystem entweder der zweite Bereich 2 zusätzlich überwacht, oder ein zusätzlicher Erfassungsbereich gebildet werden.

Es kann zweckmäßig sein, den Bewegungsmelder 3 z. B. an einer Hauswand so anzuordnen und den zweiten Erfassungsbereich 2 so zu wählen, daß eine Person grundsätzlich zuerst einen Bereich des Erfassungsbereichs 1 betritt, um anschließend gegebenenfalls den zweiten Erfassungsbereich 2 zu erreichen. Grundsätzlich arbeitet der Bewegungsmelder 3 aber auch dann, wenn eine Person direkt in den zweiten Erfassungsbereich 2 eindringt.

Fig. 2 zeigt ein Blockschema mit Funktionseinheiten des ersten Sensorsystems 10 und des zweiten Sensorsystems 11. Die Funktionseinheiten des ersten Sensorsystems 10 entsprechen denjenigen, die im oben genannten Fachbuch auf Seite 28 dargestellt und beschrieben sind. Dabei sind die üblichen optischen Komponenten, wie Linsen, gegebenenfalls Spiegel und ein oder mehrere Infrarotsensoren zu einem IR-Sensor-/Linsen-/Spiegel-System 12 zusammengefaßt. Im nachgeschalteten Verstärker-/Filter-/Schwellen-System 13 sind die üblichen elektronischen Funktionseinheiten, wie Verstärker, Filterschaltung und Schwellwertschalter zusammengefaßt. Ein Tageslichtsensor 17 ist in Verbindung mit einem Dämmerungsschalter 18 und einem Verknüpfungsglied 14 angeordnet und dafür vorgesehen, Ausgangssignale des Verstärker-/Filter-/Schwellen-Systems 13 nur dann zur Verarbeitung freizugeben, wenn ein vorgegebener Helligkeitswert unterschritten wird. Das Ausgangssignal des Verknüpfungsglieds 14 ist einem Zeitglied 15 zur Ausschaltverzögerung zugeführt, dem ein Last-Schaltglied 16, z. B. ein Relais, nachgeschaltet ist. Außerdem ist ein Netzteil 19 zur Speisung der Sensorsysteme 10 und 11 angeordnet.

Das Sensorsystem der zweiten Art 11 enthält wenigstens einen Sensor 20 und eine Auswerteeinrichtung 21. Besonders geeignet ist ein Radarsystem, das dafür eingerichtet ist, die Bewegung, und/oder Richtung und/oder Geschwindigkeit einer oder mehrerer Personen zu ermitteln und zu melden. Die so ermittelte Personenbewegung kann als Bestätigung des Detektionsergebnisses des ersten Sensorsystems 10 interpretiert werden, oder als Eindringen in einen besonders geschützten Bereich. Das Ausgangssignal des Verknüpfungsglieds 14 des ersten Sensorsystems 10 ist als Freigabesignal zur Aktivierung des zweiten Sensorsystems 11 für eine vorgegebene Dauer oder eine bestimmte Aktion genutzt.

Aus den mittels des Bewegungsmelders 3 gewinnbaren Informationen kann ein gesichertes Signal abgeleitet werden, das beispielsweise einer Alarmanlage zugeführt wird.

Der vorgeschlagene Bewegungsmelder weist damit folgende Vorteile auf:
- Beibehaltung der hochempfindlichen Erkennung, um im ersten Erfassungsbereich Licht zu schalten.
- Sichere Bewegungs-Erkennung im engeren Erfassungsbereich, deshalb auch für Alarmanwendungen geeignet.
- Der aktive Radar-Melder wird nur kurzfristig eingeschaltet, wenn er gebraucht wird. In der übrigen Zeit wird kein HF-Signal erzeugt.
- Die zusätzlich gewonnenen Erfassungsparameter ermöglichen eine Aussage über die Art der Bewegung (Richtung, Geschwindigkeit).

## Patentansprüche

1. Bewegungsmelder (3) mit
a) einem ersten Sensorsystem (10), das wenigstens einen Infrarot-Sensor enthält und für die Erfassung sich bewegender Personen in einem großen ersten Erfassungsbereich (1) ausgelegt ist,
b) wenigstens einem Sensorsystem einer zweiten Art (11), das für eine Erfassung einer Personenbewegung in einem innerhalb des ersten Erfassungsbereichs (1) liegenden kleineren zweiten Erfassungsbereich (2) ausgelegt ist, und
c) einer elektronischen Steuereinrichtung (13, 14, 18), die das wenigstens eine Sensorsystem der zweiten Art (11) nur dann für eine vorgegebene Dauer oder eine bestimmte Aktion aktiviert, wenn vom ersten Sensorsystem (10) eine Personenbewegung detektiert wurde.

2. Bewegungsmelder (3) nach Anspruch 1, **dadurch gekennzeichnet, daß** das Sensorsystem der zweiten Art (11) ein Radar-System (20, 21) ist.

3. Bewegungsmelder (3) nach Anspruch 1 oder 2, **dadurch gekennzeichnet, daß** das Sensorsystem der zweiten Art (11) wenigstens einen Sensor (20) und eine Auswerteeinrichtung (21) enthält, womit es dafür eingerichtet ist, die Bewegung, und/oder Richtung und/oder Geschwindigkeit einer Person zu ermitteln und zu melden.

4. Bewegungsmelder (3) nach einem der vorstehenden Ansprüche, **dadurch gekennzeichnet, daß** das erste Sensorsystem (10) ein IR-Sensor-/Linsen-/Spiegel-System (12) und ein Verstärker-/Filter-/Schwellen-System (13) aufweist, und mit einem Lichtsensor (17) und Dämmerungsschalter (18) kombiniert ist, wobei ein Freigabesignal zum Aktivieren des Sensorsystems der zweiten Art (11) durch ein Verknüpfungsglied (14) gebildet ist, dem Ausgangssignale des Verstärker-/Filter-/Schwellen-Systems (13) und des Dämmerungsschalters (18) zugeführt sind.

5. Bewegungsmelder (3) nach einem der vorstehenden Ansprüche, **dadurch gekennzeichnet, daß** das erste Sensorsystem (10) ein Zeitglied (15) zur Ausschaltverzögerung und ein Last-Schaltglied (16) enthält.
